# EUROPÄISCHE PATENTANMELDUNG

(11) **EP 1 780 148 A1**
(43) Veröffentlichungstag der Anmeldung: **02.05.2007**
(21) Anmeldenummer: 06015393.9
(22) Anmeldetag: 24.07.2006
(51) Int. Cl.: B65F 1/14

(54) **Behälter, insbesondere Abfallbehälter**

(30) Priorität: 26.10.2005 DE 102005051319
(71) Anmelder: Environmental Solutions Europe B.V., 6211 LE Maastricht (NL)
(72) Erfinder: Kortekamp, Karsten, 16833 Fehrbellin (DE); de Bruijn, Sjef, 71530 Champforgeuil (FR); Schröder, Kay, 16356 Ahrensfelde/Blumberg (DE)
(74) Vertreter: Müller, Thomas

(57) **Zusammenfassung**

Es wird ein Behälter, insbesondere ein Abfallbehälter, beschrieben. Um einen Behälter bereitzustellen, der aus einem Ressourcen schonenden Material hergestellt ist, ist gemäß einem ersten Aspekt vorgesehen, dass der Behälter aus einem Material in Form oder auf Basis wenigstens eines nachwachsenden Rohstoffs gebildet ist. Gemäß einem zweiten Aspekt ist vorgesehen, dass der Behälter aus einem Kompositmaterial, bestehend aus wenigstens zwei Materialkomponenten, gebildet ist und dass wenigstens eine erste Materialkomponente in Form oder auf Basis wenigstens eines nachwachsenden Rohstoffs gebildet ist.

## Beschreibung

Die vorliegende Erfindung betrifft einen Behälter. Insbesondere betrifft die Erfindung einen Abfallbehälter, wobei die Erfindung jedoch nicht auf diesen einen Behältertyp beschränkt ist.

Abfallbehälter werden seit vielen Jahrzehnten produziert und sind für die Müllentsorgung ein unabdingbarer Bestandteil. Behälter für Abfallentsorgung wurden zu Beginn aus Stahlblechen hergestellt. Mit fortschreitender Entwicklung im Bereich der Kunststoffmaterialien wurden und werden auch die klassischen Abfallbehälter immer mehr aus Kunststoffmaterialien hergestellt.

Aufgrund der begrenzten Ressourcen der für die Herstellung von Kunststoff notwendigen Rohstoffe, wie zum Beispiel Erdöl, wird es zunehmend notwendig, Alternativen für die Herstellung von Abfallbehältern zu entwickeln.

Der vorliegenden Erfindung liegt daher die Aufgabe zugrunde, einen Behälter bereitzustellen, der aus einem Ressourcen schonenden Material hergestellt ist.

Diese Aufgabe wird gelöst durch den Behälter mit den Merkmalen gemäß den unabhängigen Patentansprüchen 1 und 2. Weitere Vorteile, Merkmale, Details und Aspekte der Erfindung ergeben sich aus den Unteransprüchen sowie der Beschreibung.

Gemäß dem ersten Aspekt der Erfindung wird ein Behälter, insbesondere ein Abfallbehälter, bereitgestellt, der dadurch gekennzeichnet ist, dass dieser aus einem Material in Form oder auf Basis wenigstens eines nachwachsenden Rohstoffs gebildet ist.

Gemäß dem zweiten Aspekt der Erfindung wird ein Behälter, insbesondere ein Abfallbehälter, bereitgestellt, der dadurch gekennzeichnet ist, dass er aus einem Kompositmaterial, bestehend aus wenigstens zwei Materialkomponenten, gebildet ist und dass wenigstens eine erste Materialkomponente in Form oder auf Basis wenigstens eines nachwachsenden Rohstoffs gebildet ist.

Der Behälter beziehungsweise ein wesentlicher Bestandteil des Behältermaterials wird nunmehr durch nachwachsende Rohstoffe gebildet. Als nachwachsende Rohstoffe sind dabei ganz allgemein pflanzliche und tierische Rohstoffe zu verstehen, die zumeist aus der Land- und Forstwirtschaft stammen, biologisch erneuerbar sind und nicht für Ernährungs- oder Fütterungszwecke genutzt werden. Die Erfindung ist nicht auf die Verwendung bestimmter Typen von nachwachsenden Rohstoffen beschränkt. Im weiteren Verlauf werden hierzu einige vorteilhafte, jedoch nicht ausschließliche Beispiele beschrieben.

Damit können Behälter aus Materialien hergestellt werden, die auch in Zukunft noch kostengünstig verfügbar sind.

Die nachwachsenden Rohstoffe können je nach Art der Rohstoffe in unveränderter Form, oder aber in modifizierter Form eingesetzt werden.

Gemäß dem ersten Aspekt besteht der Behälter aus einem Material, das vollständig aus nachwachsenden Rohstoffen gebildet ist. Im einfachsten Fall besteht der Behälter aus einem einzigen Material in Form oder auf Basis eines nachwachsenden Rohstoffs. Der Behälter kann aber auch aus einem Material bestehen, das aus zwei oder mehr nachwachsenden Rohstoffen gebildet ist. Zu denken ist hier beispielsweise an einen festen oder pulverförmigen nachwachsenden Rohstoff mit einem zweiten flüssigen oder pasteuesen nachwachsenden Rohstoff als Binder. Beispiele hierzu werden im weiteren Verlauf der Beschreibung näher erläutert.

Gemäß dem zweiten Aspekt besteht der Behälter aus einem Kompositmaterial. Das Kompositmaterial besteht aus wenigstens zwei Materialkomponenten, wobei wenigstens eine Materialkomponente als nachwachsender Rohstoff oder aber auf Basis nachwachsender Rohstoffe ausgebildet ist. Grundsätzlich ist es für die Erfindung ausreichend, wenn eine einzige Materialkomponente derart ausgebildet ist. Es sind natürlich auch Ausführungsformen denkbar, in denen das Kompositmaterial zwei oder mehr Materialkomponenten aus nachwachsenden Rohstoffen aufweist, wobei diese dann vorteilhaft unterschiedlicher Art sind.

Das Material in Form oder auf Basis wenigstens eines nachwachsenden Rohstoffs oder die erste Materialkomponente besteht aus wenigstens einem nachwachsenden Rohstoff. Es kann aber auch vorgesehen sein, dass dieses/diese in Form oder auf Basis zweier oder mehr nachwachsender Rohstoffe gebildet ist.

Das Material in Form oder auf Basis wenigstens eines nachwachsenden Rohstoffs oder die erste Materialkomponente in Form oder auf Basis von nachwachsenden Rohstoffen liegt zur Herstellung des Kompositmaterials zunächst in Form eines Grundmaterials vor. Dabei kann der nachwachsende Rohstoff im Ausgangszustand in fester und/oder flüssiger Form ausgebildet sein.

Dieses Grundmaterial wird dann vorteilhaft zunächst durch einen geeigneten Prozess aufbereitet. Die Auswahl des geeigneten Aufbereitungsprozesses ergibt sich je nach Auswahl und der gewünschten Konsistenz des nachwachsenden Rohstoffs. Beispielsweise, jedoch nicht ausschließlich, können die nachwachsenden Rohstoffe durch Hobeln, Sägen, Shreddern, Zermahlen, chemisches Aufschließen und dergleichen aufbereitet werden.

Vorteilhaft kann der nachwachsende Rohstoff als kompostierbares Material ausgebildet sein. Ein solches Material bietet erhebliche Vorteile im Zusammenhang mit einer späteren Entsorgung des Behälters.

Nachfolgend werden einige nicht ausschließliche Beispiele für geeignete nachwachsende Rohstoffe beschrieben. Vorteilhaft kann der nachwachsende Rohstoff in Form von Fasern und/oder Spänen und/oder Agglomeraten und/oder Pulver ausgebildet sein.

Fasern können beispielsweise in Form von Naturfasern, etwa Wollfasern (Schafwolle, Baumwolle und dergleichen), Kokosfasern, Hanffasern und dergleichen ausgebildet sein. Weiterhin geeignet sind auch Holz, Holzfraktionen und dergleichen. Holz kann vorteilhaft in Form von Spänen und dergleichen vorgesehen sein. Weiterhin geeignet sind auch Stroh, Naturmehle und dergleichen. Agglomerate von nachwachsenden Rohstoffen sind allgemein verdichtete Materialverbünde, beispielsweise Kapseln, Pellets und dergleichen.

Bei den vorstehend genannten nachwachsenden Rohstoffen handelt es sich um feste Stoffe. Alternativ oder zusätzlich ist es auch möglich, dass die nachwachsenden Rohstoffe in flüssiger oder pasteuser Form vorliegen. Hierbei kann es sich beispielsweise um Naturharze oder dergleichen handeln.

Wenn der Behälter oder die erste Materialkomponente des Kompositmaterials aus zwei oder mehr nachwachsenden Rohstoffen besteht, kann es sich bei einem nachwachsenden Rohstoff beispielsweise um einen wie weiter oben beschriebenen festen Stoff, und bei einem nachwachsenden Rohstoff beispielsweise um einen wie vorstehend beschriebenen flüssigen oder pasteusen Stoff handeln. Der letztgenannte Rohstoff kann dann vorteilhaft die Funktion eines Bindemittels übernehmen.

Die Ausgangsmaterialien der nachwachsenden Rohstoffe werden zur Herstellung eines Kompositmaterials mit wenigstens einer weiteren Materialkomponente vereinigt, beispielsweise compoundiert. Diese Materialmischung stellt dann das für das Herstellverfahren des Behälters erforderliche Ausgangsmaterial dar. Je nach Art der verwendeten Materialkomponenten kann vorgesehen sein, dass zur Herstellung der Materialkomponente "Nachwachsende Rohstoffe" zunächst vorgelagerte Prozessschritte erforderlich sind.

Vorteilhaft kann eine zweite Materialkomponente des Kompositmaterials aus wenigstens einem Kunststoff gebildet sein. Dabei ist die Erfindung jedoch nicht auf die Verwendung bestimmter Kunststoffe beschränkt. Vorteilhaft kann die zweite Materialkomponente wenigstens einen Thermoplasten umfassen.

Die Gruppe der Thermoplaste zeichnet sich generell dadurch aus, dass diese Kunststoffe aus langen, linearen oder verzweigten Molekülen bestehen und durch Energiezufuhr - bei einer bestimmten Temperatur (dem Erweichungspunkt) - erweichen und plastisch werden, sich verformen lassen und nach der Abkühlung wieder erstarren. Dieser Vorgang ist beliebig oft wiederholbar. Wichtige Thermoplaste sind zum Beispiel die Polyamide, Polystyrole, und Polyolefine (zum Beispiel Polyethylene, Polypropylen). Thermoplaste lassen sich besonders vorteilhaft mittels Spritzguss, Extrusion, Thermoformen und dergleichen verarbeiten. Sie sind daher zur Herstellung von Behältern besonders geeignet.

Vorteilhaft kann eine zweite Materialkomponente in Form eines Matrixmaterials - beispielsweise eines Matrixmaterials auf Basis wenigstens eines Thermoplasten - ausgebildet sein, in dem die erste Materialkomponente verteilt ist. Beispielsweise könnte die erste Materialkomponente "Nachwachsende Rohstoffe" in einem solchen Fall in Form von Fasern ausgebildet sein. Wenn der Behälter nur aus nachwachsenden Rohstoffen besteht, kann das Matrixmaterial beispielsweise aus einem flüssigen oder pasteusen nachwachsenden Rohstoff, beispielsweise aus Naturharz, bestehen, in dem dann ein weiterer - vorzugsweise ein fester - nachwachsender Rohstoff verteilt ist.

In weiterer Ausgestaltung kann in dem Material in Form oder auf Basis wenigstens eines nachwachsenden Rohstoffs oder in dem Kompositmaterial wenigstens ein weiteres Additiv vorgesehen sein. Dabei können je nach Bedarf unterschiedliche Additive eingesetzt werden. Nachfolgend werden hierzu einige nicht ausschließliche Beispiele beschrieben. Beispielsweise kann es sich bei den Additiven um die Eigenschaft des Kompositmaterials beeinflussende Materialien handeln. Beispielsweise kann es sich bei einem Additiv um ein Bindemittel handeln, etwa ein Harz oder dergleichen. Auch können Additive in Form von Gummimehl, Glas- und Langglasfasern, Stabilisierungs- oder Schutzadditiven zum Einsatz kommen. Die Additive können in Form oder auf Basis nachwachsender Rohstoffe ausgebildet sein. Natürlich können die Additive auch künstlicher Natur sein. Vorzugsweise sind die Additive biologisch abbaubar.

Nachfolgend werden einige Beispiele für vorteilhafte Zusammensetzungen von Materialien in Form oder auf Basis wenigstens eines nachwachsenden Rohstoffs beziehungsweise von Kompositmaterialien beschrieben.

Gemäß einer vorteilhaften Ausgestaltung kann das Material in Form oder auf Basis wenigstens eines nachwachsenden Rohstoffs oder die erste Materialkomponente in Form oder auf Basis wenigstens eines nachwachsenden Rohstoffs mit einem prozentualen Anteil von 5% bis 100% vorgesehen sein. Beim ersten Erfindungsaspekt bezieht sich der prozentuale Anteil auf das Behältermaterial an sich. Beim zweiten Erfindungsaspekt bezieht sich der prozentuale Anteil auf die erste Materialkomponente im Kompositmaterial.

Vorteilhaft kann das Kompositmaterial eine erste Materialkomponente in Form oder auf Basis wenigstens eines nachwachsenden Rohstoffs mit einem prozentualen Anteil von 10% bis 50%, eine zweite Materialkomponente, insbesondere wenigstens einen Thermoplasten, mit einem prozentualen Anteil von 90% bis 50% und optional wenigstens ein weiteres Additiv aufweisen. In diesem Fall ist das Mischungsverhältnis vorzugsweise wie folgt: Thermoplaste (z. B. Polyolefine) 50% - 90%, nachwachsender Rohstoff 10% - 50%, darin enthalten können in unterschiedlichen Abstufungen Eigenschaftsbeeinflussende Komponenten sein (beispielsweise Bindemittel, Gummimehl, Glas- und Langglasfasern, Stabilisierungs-oder Schutzadditive).

In anderer Ausgestaltung kann das Kompositmaterial eine erste Materialkomponente in Form oder auf Basis wenigstens eines nachwachsenden Rohstoffs mit einem prozentualen Anteil von 90% bis 50%, eine zweite Materialkomponente, insbesondere wenigstens einen Thermoplasten, mit einem prozentualen Anteil von 10% bis 50% und optional wenigstens ein weiteres Additiv aufweisen. Ein solches Mischungsverhältnis eignet sich besonders gut für Spritzguss. In diesem Fall ist das Mischungsverhältnis vorzugsweise wie folgt: Thermoplaste (z. B. Polyolefine) 10% - 50%, nachwachsender Rohstoff 90% -50%, darin enthalten können in unterschiedlichen Abstufungen Eigenschaftsbeeinflussende Komponenten sein (beispielsweise Bindemittel, Gummimehl, Glas- und Langglasfasern, Stabilisierungs-oder Schutzadditive).

Der aus dem vorstehend beschriebenen Material in Form oder auf Basis wenigstens eines nachwachsenden Rohstoffs oder dem Kompositmaterial hergestellte Behälter ist nicht auf bestimmte Anwendungsbereiche beschränkt. Beispielsweise, jedoch nicht ausschließlich, kann der Behälter als Lagerbehälter, Transportbehälter, Depotbehälter, Entsorgungsbehälter oder dergleichen ausgebildet sein. Besonders vorteilhaft kann es sich bei dem Behälter um einen Abfallbehälter, einen Wertstoff-Sammelbehälter, einen Papierkorb oder dergleichen handeln. Der Behälter kann mit Rollen versehen sein, beispielsweise mit 2 Rollen oder mit 4 Rollen. Auch ist es möglich, dass der Behälter einen Deckel aufweist. In diesem Fall bestehen vorteilhaft sowohl der Deckel als auch der eigentliche Behälterkorpus aus dem wie vorstehend beschriebenen Material in Form oder auf Basis wenigstens eines nachwachsenden Rohstoffs beziehungsweise dem Kompositmaterial.

Ein wie vorstehend beschriebener Behälter kann unter Verwendung unterschiedlichster Verfahren hergestellt werden. Nachfolgend werden hierzu einige nicht ausschließliche Beispiele näher erläutert.

Beispielsweise kann der Behälter durch ein Spritzgussverfahren hergestellt sein/werden. Beim Spritzguss handelt es sich generell um ein Formverfahren, bei dem die Formmasse von einem geheizten Zylinder aus, unter Druck durch eine Düse in die Höhlung des geschlossenen Werkzeugs eingespritzt wird und dabei abkühlt und sich verfestigt.

Auch ist es denkbar, dass der Behälter durch ein Extrusionsverfahren hergestellt ist/wird. Dabei handelt es sich allgemein um ein Verarbeitungsverfahren, bei dem aufgeheizte oder nicht aufgeheizte Formmassen durch eine geformte Öffnung gedrückt werden, um ein endloses, geformtes Teil zu bilden. Es handelt sich vorzugsweise um ein kontinuierliches Verfahren, in dem das Material in Form oder auf Basis wenigstens eines nachwachsenden Rohstoffs oder das Kompositmaterial zu Profilen verarbeitet wird.

In anderer Ausgestaltung kann der Behälter auch durch ein Pressverfahren hergestellt sein/werden.

Denkbar ist ebenfalls, dass der Behälter durch ein Rotomolding-Verfahren hergestellt ist/wird. Rotomolding oder Rotationsformen ist eine äußerst vielseitige Herstellungsoption, die unzählige Designmöglichkeiten bietet und zusätzlich den Vorteil geringer Produktionskosten besitzt. Das Verfahren beim Rotationsformen beginnt generell mit einer Herstellungsform, die in einer mit Lade-, Heiz - und Kühlbereich ausgestatteten Formmaschine eingespannt wird. Es können mehrere Formen gleichzeitig in die Maschine eingespannt werden. Nach dem Laden jeder Form mit einer vorbestimmen Menge an Material in Form oder auf Basis wenigstens eines nachwachsenden Rohstoffs oder an Kompositmaterial werden die Formen in die Heizkammer geführt, wo sie sowohl auf vertikaler als auch auf horizontaler Achse gedreht werden. Das schmelzende Material in Form oder auf Basis wenigstens eines nachwachsenden Rohstoffs beziehungsweise Kompositmaterial klebt an der heißen Form an und deckt die Oberfläche gleichmäßig ab. Die Form rotiert auch während des Kühlvorgangs, damit die Teile eine gleichmäßige Wandstärke beibehalten. Nach dem Abkühlen der Teile werden sie aus der Form ausgestoßen. Rotationsgeschwindigkeit, Heiz- und Kühlzeiten werden während des gesamten Vorgangs gesteuert.

Möglich ist auch das Rotationsschmelzen, bei dem es sich um ein Verfahren analog dem Rotationsgießen handelt. Hierbei werden trockene, schmelzbare feine Pulver auf die Formhöhlung verteilt geschmolzen und abgekühlt.

## Patentansprüche

1. Behälter, insbesondere Abfallbehälter, **dadurch gekennzeichnet, dass** der Behälter aus einem Material in Form oder auf Basis wenigstens eines nachwachsenden Rohstoffs gebildet ist.

2. Behälter, insbesondere Abfallbehälter, **dadurch gekennzeichnet, dass** der Behälter aus einem Kompositmaterial, bestehend aus wenigstens zwei Materialkomponenten, gebildet ist und dass wenigstens eine erste Materialkomponente in Form oder auf Basis wenigstens eines nachwachsenden Rohstoffs gebildet ist.

3. Behälter nach Anspruch 1 oder 2, **dadurch gekennzeichnet, dass** das Material in Form oder auf Basis wenigstens eines nachwachsenden Rohstoffs oder die erste Materialkomponente in Form oder auf Basis zweier oder mehr nachwachsender Rohstoffe gebildet ist.

4. Behälter nach einem der Ansprüche 1 bis 3, **dadurch gekennzeichnet, dass** der nachwachsende Rohstoff im Ausgangszustand in fester und/oder flüssiger Form ausgebildet ist.

5. Behälter nach einem der Ansprüche 1 bis 4, **dadurch gekennzeichnet, dass** der nachwachsende Rohstoff oder die nachwachsenden Rohstoffe als kompostierbares Material ausgebildet ist/sind.

6. Behälter nach einem der Ansprüche 1 bis 5, **dadurch gekennzeichnet, dass** der nachwachsende Rohstoff in Form von Fasern und/oder Spänen und/oder Agglomeraten und/oder Pulver ausgebildet ist.

7. Behälter nach einem der Ansprüche 2 bis 6, **dadurch gekennzeichnet, dass** eine zweite Materialkomponente aus wenigstens Kunststoff gebildet ist.

8. Behälter nach Anspruch 7, **dadurch gekennzeichnet, dass** die zweite Materialkomponente wenigstens einen Thermoplasten umfasst.

9. Behälter nach einem der Ansprüche 2 bis 8, **dadurch gekennzeichnet, dass** eine zweite Materialkomponente in Form eines Matrixmaterials ausgebildet ist, in dem die erste Materialkomponente verteilt ist.

10. Behälter nach einem der Ansprüche 1 bis 9, **dadurch gekennzeichnet, dass** in dem Material in Form oder auf Basis wenigstens eines nachwachsenden Rohstoffs oder in dem Kompositmaterial wenigstens ein weiteres Additiv vorgesehen ist.

11. Behälter nach einem der Ansprüche 1 bis 10, **dadurch gekennzeichnet, dass** das Material in Form oder auf Basis wenigstens eines nachwachsenden Rohstoffs oder die erste Materialkomponente in Form oder auf Basis wenigstens eines nachwachsenden Rohstoffs mit einem prozentualen Anteil von 5% bis 100% vorgesehen ist.

12. Behälter nach einem der Ansprüche 2 bis 11, **dadurch gekennzeichnet, dass** das Kompositmaterial eine erste Materialkomponente in Form oder auf Basis wenigstens eines nachwachsenden Rohstoffs mit einem prozentualen Anteil von 10% bis 50%, eine zweite Materialkomponente, insbesondere wenigstens einen Thermoplasten, mit einem prozentualen Anteil von 90% bis 50% und optional wenigstens ein weiteres Additiv aufweist.

13. Behälter nach einem der Ansprüche 2 bis 11, **dadurch gekennzeichnet, dass** das Kompositmaterial eine erste Materialkomponente in Form oder auf Basis wenigstens eines nachwachsenden Rohstoffs mit einem prozentualen Anteil von 90% bis 50%, eine zweite Materialkomponente, insbesondere wenigstens einen Thermoplasten, mit einem prozentualen Anteil von 10% bis 50% und optional wenigstens ein weiteres Additiv aufweist.

14. Behälter nach einem der Ansprüche 1 bis 13, **dadurch gekennzeichnet, dass** dieser als Lagerbehälter, Transportbehälter, Depotbehälter oder Entsorgungsbehälter ausgebildet ist.

15. Behälter nach einem der Ansprüche 1 bis 14, **dadurch gekennzeichnet, dass** dieser durch ein Spritzgussverfahren hergestellt ist.

16. Behälter nach einem der Ansprüche 1 bis 14, **dadurch gekennzeichnet, dass** dieser durch ein Extrusionsverfahren hergestellt ist.

17. Behälter nach einem der Ansprüche 1 bis 14, **dadurch gekennzeichnet, dass** dieser durch ein Pressverfahren hergestellt ist.

18. Behälter nach einem der Ansprüche 1 bis 14, **dadurch gekennzeichnet, dass** dieser durch ein Rotomolding-Verfahren hergestellt ist.
